# EUROPÄISCHE PATENTSCHRIFT

(11) **EP 0 687 435 B1**
(45) Veröffentlichungstag und Bekanntmachung des Hinweises auf die Patenterteilung: **06.09.2000**
(21) Anmeldenummer: 94109371.8
(22) Anmeldetag: 17.06.1994
(51) Int. Cl.: A47J 31/06

(54) **Filtereinsatz für Espressomaschinen**
Filter cup for espresso machines
Porte-filtre pour machinés à café espresso

(43) Veröffentlichungstag der Anmeldung: 20.12.1995
(73) Patentinhaber: Eugster/Frismag AG, CH-8590 Romanshorn (CH)
(72) Erfinder: Mahlich, Gotthard, Dipl.-Ing., D-61476 Kronberg/Ts. (DE)
(74) Vertreter: Schubert, Siegmar, Dipl.-Ing.

(56) Entgegenhaltungen:
- EP-A- 0 515 245
- DE-U- 9 012 330

## Beschreibung

Die Erfindung betrifft einen topfförmigen Dauerfiltereinsatz für Espressomaschinen nach dem Oberbegriff des Anspruchs 1 bzw. Anspruchs 2.

Espressokaffee wird derart zubereitet, daß Heißwasser mit einer optimalen Temperatur von ca. 96° C durch in einem Filtertopf befindliches Kaffeemehl mit einem Druck von ca. 3-15 bar gedrückt wird. Der Druckaufbau entsteht durch den Filterwiderstand und durch die Drosselwirkung des feuchten Kaffeesumpfes. Der Druck, der durch die Förderleistung der Wasserpumpe entsteht, bewirkt, daß die Kontaktzeit des heißen Wassers mit dem Kaffeemehl nur so lang ist, daß zwar alle anregenden Stoffe sowie die Aromastoffe aus dem Kaffee gelöst werden, magenschädliche Säuren und bestimmte Bitterstoffe aber nicht extrahiert werden. Außerdem werden durch den Druck ätherische Öle aus dem Kaffeemehl gepreßt, die zu der zu einem guten Espresso gehörenden typischen Crema führen. Zur Bildung dieser Crema ist ein Druck von mindestens 2 bar erforderlich.

Der Druckaufbau ist eine Funktion der freien Durchlauffläche (also Lochquerschnitt x Lochzahl) des Filters in Abhängigkeit des Mahlgrades und des Staubanteils des Kaffeemehles.

Bei optimalen Verhältnissen bilden die Summe der Löcher und der Kaffeesumpf eine Drosselstrecke, die die Qualität des Expressos bestimmt.

Übliche Dauerfiltereinsätze, wie sie in kommerziellen und auch in Haushaltsmaschinen verwendet werden, weisen eine Anzahl von Lochdurchbrüchen im Filterboden auf. Die Durchbrüche werden normalerweise so hergestellt, daß mittels einer Vielzahl von bevorzugt im Grundriß quadratischen pyramidisch spitz zulaufenden Dornen in den Filterboden entgegen der Fließrichtung des Kaffees Löcher gestoßen werden, deren Durchstoßgrate auf der Innenseite des Filterbodens weggeschliffen werden. Die Lochformen der dadurch entstehenden Siebdurchbrüche unterscheiden sich dabei innerhalb der Fertigungstoleranzen nur marginal. Die Querschnitte der Löcher bilden angenäherte Quadrate und haben einen freien Durchgang von ca. 0.16-0.25 mm². Die Anzahl der Löcher liegt bei 300-350. Damit ergibt sich ein gesamter freier Durchlaß von ca. 50-80 mm².

Diese Dauerfilter erfordern einen in relativ engen Grenzen gehaltenen Mahlgrad des Kaffeemehls und einen möglichst geringen Staubanteil. Bei einem zu groben Mahlgrad entsteht kein Druck und das Wasser läuft zu schnell durch das Kaffeemehl. Außerdem werden die ätherischen Öle nicht ausgepreßt und es entsteht keine Crema. Bei einem zu feinen Mahlgrad oder einem hohen Staubanteil werden die Filterlöcher verstopft, die Pumpe baut einen sehr hohen Druck auf, ohne daß der Espressosud ablaufen kann.

Im kommerziellen Bereich wird ein gleichmäßiges gutes Brühergebnis dadurch erreicht, daß vom Kaffeelieferanten gleichmäßig vorgemahlenes Kaffeemehl (sogenannte Industriemahlung) angeliefert oder vom Maschinenbetreiber mit eigener Kaffeemühle mit einem erprobten Mahlgrad das richtige Granulat erzeugt wird.

Bei Haushaltsmaschinen dagegen kommen unterschiedlichste vorgemahlene Kaffeesorten mit erheblich unterschiedlichen Mahlgraden und Staubanteilen (auch bei Beibehaltung der Marke) bzw. selbstgemahlener Kaffee aus z. T. für Expresso ungeeigneten Mahlwerken zum Einsatz. Oft werden aus diesem Grunde unbefriedigende Brühergebnisse erzielt, obwohl die Espressomaschine in Ordnung ist.

Bekannt ist ein planer Dauerfiltereinsatz für Espressomaschinen, der im übrigen die in dem Oberbegriff des Anspruchs 1 bzw. 2 angegebenen Merkmale aufweist (EP-A-0 515 245). Aus dem Dauerfiltereinsatz sind Öffnungen ausgeformt, die jedoch mit elastischen Abdeckmitteln versehen sind, welche erst öffnen sollen, wenn ein gewisser Druck in einem Gefäß erreicht ist, welches den Dauerfiltereinsatz aufnimmt. Es soll damit ein Durchgang freigegeben werden, der genügend eng ist, um das Filtern der Flüssigkeit zu gewährleisten, die mit dem Kaffeemehl in Berührung stand. Die elastischen Abdeckmittel sind durch je eine elastische Zunge verwirklicht, die an dem Dauerfiltereinsatz befestigt ist und die Öffnung im wesentlichen verschließt. Die effektive Öffnung ist somit druckabhängig, und es soll druckabhängig mehr oder weniger extrahierter Kaffee abfließen, während der gemahlene Kaffee zurückgehalten wird. Die genannte Öffnung umfaßt im einzelnen einen Spalt, der an einer Stirnseite der Zunge gebildet wird und je nach Auslenkung der Zunge zwischen 0 bis 0,2 mm variieren kann. Der Spalt geht beidseites quer in Ausschnitte der Längsseiten der Zunge über, die zum Beispiel 5 mm auseinanderliegen. Damit wird längs des Umfangs der Zunge ein zweimal abgewinkelter Gesamtschlitz gebildet, der ein Vielfaches länger ist als der Spalt an der Stirnseite der Zunge und dessen Verlauf (Spaltweite) insbesondere bei Auslenkung der Zunge nicht genau bestimmt ist. Die Zunge wirkt somit zum Teil undefiniert und unzuverlässig, zumal eine Materialermüdung der Zunge selbst dann auftreten kann, wenn diese nur im elastischen Bereich ausgelenkt wird. Außerdem kann bei Verminderung des Drucks in dem Dauerfiltereinsatz gemahlener Kaffe zwischen dem Rand der Öffnung und der elastischen Zunge eingeklemmt werden, der sich beim Reinigen nicht ohne weiteres entfernen läßt. Somit liegen die effektive Öffnung des Spalts und ein freier Durchlaß nicht fest, und es ist nicht gewährleistet, daß der bekannte Dauerfiltereinsatz zuverlässig guten Espresso liefert, erst recht bei unterschiedlichen Kaffeesorten, Mahlgrad und Staubanteil.

Die vorliegende Erfindung hat es sich zur Aufgabe gestellt, einen Dauerfiltereinsatz zu entwickeln, der von Kaffeesorte, Mahlgrad und Staubanteil unabhängig gleichmäßig gute Espresso-Ergebnisse liefert.

Die Lösung dieser Aufgabe gelingt erfindungsgemäß durch einen Dauerfiltereinsatz mit den im kennzeichnenden Teil der Ansprüche 1 bzw. 2 angegebenen Merkmalen.

Durch die Entlastungsschlitze wird vermieden, daß bei einer Verstopfung der Filterlöcher durch Kaffeemehlpartikel (die ja in ihrer Form den üblichen Lochdurchbrüchen ähnlich sind) der Abfluß verhindert wird, da sich die Schlitze nicht zusetzen und auch durch die dadurch beibehaltene Fließdynamik im Filtertopf eine permanente Verstopfung der Löcher vermieden wird.

Die Löcher können hierbei die herkömmliche Form und Größe haben oder auch eine abgewandelte Form und Größe, beispielsweise kreisförmig, dreieckig, rombisch oder quadratisch.

Die Anzahl der Schlitze sollte so bemessen sein, daß der freie Durchlaß des Siebes, der in dieser Ausführungsform von den Löchern ausgeht, nur unwesentlich vergrößert wird. Als gutes Verhältnis hat sich im Versuch ein Wert der Schlitzzahl zur Lochzahl von ca. 1,5 % ergeben. Die Schlitzabmessungen betrugen dabei ca. 0,15 x 1,5 mm, so daß pro Schlitz ein Durchlaß von 0,225 mm² entsteht. Bei ca. 300 Löchern würde das einer Vergrößerung des freien Siebdurchlasses um ca. 1,01 mm² entsprechen.

Durch diese Schlitze kann der freie Querschnitt der Summe der Löcher auf ca. 15 mm² verringert werden, was zu einer Crema-Bildung auch bei grobem Kaffeemehl führt, ohne daß bei einer Kaffeemahlung auch mit hohem Staubanteil eine Verstopfung auftritt.

Im allgemeinen hat das erfindungsgemäße Lochsieb einen wesentlich kleineren freien Durchlaß als bekannte Lochsiebe, und zwar berechnet bei etwa gleicher Lochzahl. Die Lochgröße liegt bei einen freien Durchlaß von ca. 0,05 mm² und die Summe der Durchlässe bei ca. 15 mm². Bei der sogenannten gemischten Anordnung, bei der also die Entlastungsschlitze und die Löcher vorgesehen sind, weist das Sieb zusätzlich zu diesen ca. 300 Löchern eine Anzahl der Entlastungsschlitze auf, beispielsweise 5 Stück.

Alternativ ist es zur Lösung der Aufgabe möglich, gemäß dem kennzeichnenden Teil des Anspruchs 2 das gesamte Sieb aus offenen Schlitzen der definierten Form darzustellen. Für einen gleichen freien Durchlaß wie im vorstehenden Beispiel wären dann ca. 70 Schlitze erforderlich. Im Versuch hat sich gezeigt, daß, offenbar bedingt durch die bessere Fließdynamik, mit einer wesentlichen kleineren Schlitzzahl ausgekommen werden kann (ca. 30 Stück).

Wenn die Entlastungsschlitze gleichmäßig über die Fläche des Bodens verteilt sind, wie dies bevorzugt wird, so ergibt sich der gewünschte Effekt praktisch im ganzen Volumen des Filtereinsatzes.

Die Erfindung wird im folgenden anhand von Ausführungsbeispielen näher erläutert, aus denen sich weitere wichtige Merkmale ergeben. Es zeigt:
- **Fig. 1**: eine Seitenansicht eines erfindungsgemäßen Dauerfiltereinsatzes;
- **Fig. 2**: eine Draufsicht auf Figur 1 bei einer ersten Ausführungsform;
- **Fig. 3**: eine Draufsicht entsprechend Figur 2 bei einer zweiten Ausführungsform;
- **Fig. 4**: vergrößert einen Ausschnitt aus der Draufsicht nach Figur 2 zur Darstellung von Einzelheiten.

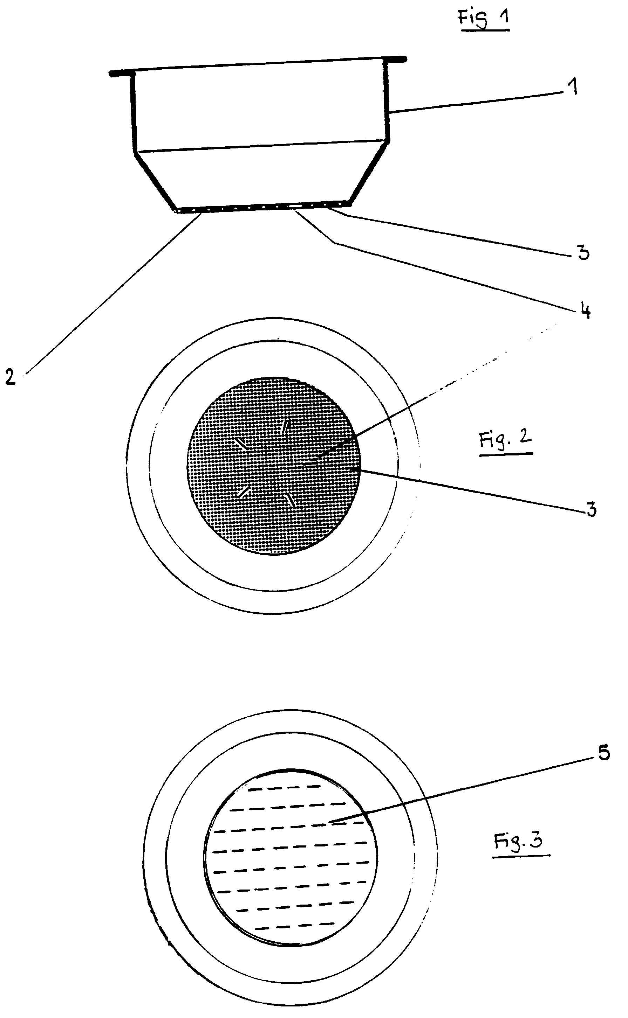

Figur 1 zeigt einen Dauerfiltereinsatz 1 mit einem Filterboden 2, in dem eine Vielzahl von Filterlöchern 3 ausgebildet ist, die herkömmlich sein können oder sie haben eine davon abweichende Gestalt oder Größe, wie vorstehend erläutert.

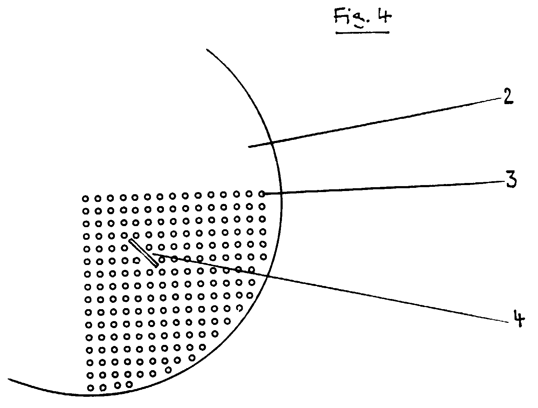

Erfindungsgemäß sind bei der Ausführungsform nach Figur 1, 2 und 4 mehrere Entlastungsechlitze 4 gleichmäßig über den Boden 2 des Einsatzes 1 verteilt angeordnet.

Die Ausführungsform nach Figur 3 verzichtet auf die Löcher 3 und stattdessen sind ausschließlich derartige Schlitze 5 vorgesehen. Versuche haben ergeben, daß etwa 30 - 50 dieser Schlitze angebracht sein sollten.

## Patentansprüche

1. Topfförmiger Dauerfiltereinsatz (1) für Espressomaschinen, mit mehreren Entlastungsschlitzen (4) in einem Filterboden (2),
**dadurch gekennzeichnet**,
daß im Boden (2) des Filtereinsatzes (1) die Entlastungsschlitze (4) zusätzlich zu Filterlöchern (3) vorgesehen sind, und daß die Entlastungsschlitze (4) immer offen sind, eine gerade längliche Form aufweisen und Abmessungen von ca. 0,1 bis 0,2 x 1,5 bis 2,5 mm aufweisen.

2. Topfförmiger Dauerfiltereinsatz für Espressomaschinen, mit mehreren Entlastungsschlitzen (4,5) in einem Filterboden (2),
**dadurch gekennzeichnet**,
daß im Boden (2) ausschließlich die Entlastungsschlitze (5) vorgesehen sind, und daß die Entlastungsschlitze (5) eine gerade längliche Form aufweisen, immer offen sind und Abmessungen von ca. 0,1 bis 0,2 x 1,5 bis 2,5 mm aufweisen.

3. Dauerfiltereinsatz nach Anspruch 1 oder 2,
**dadurch gekennzeichnet**,
daß die Anzahl und Größe der Entlastungsschlitze (4,5) so bemessen sind, daß der freie Durchlaß des Filters ca. 7 bis 20 mm² beträgt, vorzugsweise ca. 15 mm².

4. Dauerfiltereinsatz nach einem der Ansprüche 1 bis 3,
**dadurch gekennzeichnet**,
daß die Entlastungsschlitze (4,5) Abmessungen von ca. 0,15 x 1,5 mm aufweisen.

5. Dauerfiltereinsatz nach einem der Ansprüche 1 bis 4,
**dadurch gekennzeichnet**,
daß die Entlastungsschlitze (4,5) möglichst gleichmäßig über die Fläche des Bodens (2) verteilt sind.

## Claims

1. Pot-shaped permanent filter element (1) for Espresso machines, with several discharge slits (4) in a filter base (2),
characterised in that the discharge slits (4) are provided in the base (2) of the filter element (1) in addition to the filter holes (3), and that the discharge slits (4) are always open, have a straight oblong shape and have dimensions of approx. 0.1 to 0.2 × 1.5 to 2.5 mm.

2. Pot-shaped permanent filter element for Espresso machines, with several discharge slits (4, 5) in a filter base (2),
characterised in that only discharge slits (5) are provided in the base (2), and that the discharge slits (5) have a straight oblong shape, are always open and have dimensions of approx. 0.1 to 0.2 × 1.5 to 2.5 mm.

3. Permanent filter element as in claim 1 or 2,
characterised in that the number and the size of the discharge slits (4, 5) are calculated so that the free passage through the filter is approx. 7 to 20 mm², preferably approx. 15 mm².

4. Permanent filter element as in one of claims 1 to 3,
characterised in that the discharge slits (4, 5) have dimensions of approx. 0.15 × 1.5 mm.

5. Permanent filter element as in one of claims 1 to 4,
characterised in that the discharge slits (4, 5) are distributed as evenly as possible over the surface of the base (2).

## Revendications

1. Embout-filtre réutilisable (1), en forme de coupelle, pour machines à café express, comportant plusieurs fentes de relâchement (4) dans un fond filtrant (2),
caractérisé
en ce que, dans le fond (2) de l'embout-filtre (1), les fentes de relâchement (4) sont prévues en supplément à des trous de filtre (3), et en ce que les fentes de relâchement (4) sont en permanence ouvertes, possèdent une forme allongée rectiligne et présentent des dimensions d'environ 0,1 à 0,2 x 1,5 à 2,5 mm.

2. Embout-filtre réutilisable, en forme de coupelle, pour machines à café express, comportant plusieurs fentes de relâchement (4, 5) dans un fond filtrant (2),
caractérisé
en ce que, dans le fond (2), ne sont prévues que les fentes de relâchement (5), et en ce que les fentes de relâchement (5) possèdent une forme allongée rectiligne, sont en permanence ouvertes et présentent des dimensions d'environ 0.1 à 0,2 x 1,5 à 2,5 mm.

3. Embout-filtre réutilisable selon la revendication 1 ou 2,
caractérisé
en ce que le nombre et la taille des fentes de relâchement (4, 5) sont calculés de telle sorte que l'aire de passage libre à travers le filtre soit de 7 à 20 mm² environ, de préférence de 15 mm² environ.

4. Embout-filtre réutilisable selon l'une des revendications 1 à 3,
caractérisé
en ce que les fentes de relâchement (4, 5) présentent des dimensions d'environ 0,15 x 1.5 mm.

5. Embout-filtre réutilisable selon l'une des revendications 1 à 4,
caractérisé
en ce que les fentes de relâchement (4, 5) sont réparties le plus uniformément possible sur la surface du fond (2).
